# EUROPÄISCHE PATENTSCHRIFT

(11) **EP 3 092 748 B1**
(45) Veröffentlichungstag und Bekanntmachung des Hinweises auf die Patenterteilung: **24.06.2020**
(21) Anmeldenummer: 14722594.0
(22) Anmeldetag: 23.04.2014
(51) Int. Cl.: H04L 12/26, H04L 29/08, H04L 12/24

(54) **VERFAHREN UND SYSTEM ZUR DIAGNOSE VON ÜBERTRAGUNGS-STÖRUNGEN IN EINEM NETZWERK GEMÄSS OPC UA STANDARD**
METHOD AND SYSTEM FOR DIAGNOSING TRANSMISSION INTERFERENCES IN A NETWORK ACCORDING TO THE OPC UA STANDARD
PROCÉDÉ ET SYSTÈME POUR LE DIAGNOSTIC DE PERTURBATIONS DE TRANSMISSION DANS UN RÉSEAU SELON LE STANDARD OPC UA

(43) Veröffentlichungstag der Anmeldung: 16.11.2016
(73) Patentinhaber: Siemens Aktiengesellschaft, 80333 München (DE)
(72) Erfinder: KERSCHBAUM, Sven, 90768 Fürth (DE); HELLER, Matthias, 90475 Nürnberg (DE); VOLKMANN, Frank, 90475 Nürnberg (DE)
(86) Internationale Anmeldenummer: PCT/EP2014/058191
(87) Internationale Veröffentlichungsnummer: WO 2015/161871

(56) Entgegenhaltungen:
- US-A1- 2003 149 919
- US-A1- 2010 208 595
- "PING (8) - FreeBSD System Manager's Manual", , 4. April 2006 (2006-04-04), XP055160563, Gefunden im Internet: URL:http://www.freebsd.org/cgi/man.cgi?que ry=ping&apropos=0&sektion=8&manpath=FreeBS D 10.1-RELEASE&arch=default&format=pdf [gefunden am 2015-01-08]
- STEFAN-HELMUT LEITNER ET AL: "OPC UA - Service-oriented Architecture for Industrial Applications", SOFTWARETECHNIK-TRENDS, GESELLSCHAFT FUER INFORMATIK, DE , Bd. 26, Nr. 4 1. Januar 2006 (2006-01-01), Seiten 1-6, XP002569537, ISSN: 0720-8928 Gefunden im Internet: URL:http://pi.informatik.uni-siegen.de/stt /26_4/01_Fachgruppenberichte/ORA2006/07_le itner-final.pdf

## Beschreibung

PROFINET (Process Field Network) ist der offene Industrial Ethernet-Standard von Profibus & Profinet International (PI) für die Automatisierung. PROFINET nutzt TCP/IP und IT-Standards, ist Echtzeit-Ethernet-fähig und ermöglicht die Integration von Feldbus-Systemen. Es ist ein inzwischen sehr weit verbreitetes echtzeitfähiges Industrieprotokoll zur Übertragung von Prozessdaten.
Man unterscheidet zwischen PROFINET IRT (Isochronous-Real-Time)und RT (Real-Time). PROFINET IRT bietet im Gegensatz zu RT harte Echtzeitfähigkeit.

Die PROFINET IRT Kommunikation besteht aus einem isochronen Real-Time Kommunikationsanteil und einem Non-Real-Time Kommunikationsanteil (NRT). Der IRT-Anteil ist vorgeplant, indem Zeitschlitze verschiedenen Sendern zugeteilt werden. Dieser Zeitbereich füllt aber nicht 100% des verfügbaren Zeitbereichs (pro Zyklus) aus. Der Rest kann für NRT-Verkehr verwendet werden.

Die IRT-Kommunikation zeichnet sich unter anderem durch folgende Merkmale aus:
Die Übertragung der Daten erfolgt in äquidistanten Zeitintervallen. Jedes Zeitintervall wird in ein IRT-Intervall (IRT-Kanal) und in ein offenes Intervall (offener Kanal) unterteilt. Am Anfang eines jeden Zeitintervalls erfolgt eine Zeitsynchronisation.

Ein IRT-Frame ist durch seine zeitliche Lage innerhalb des IRT-Kanals gekennzeichnet. Die Zeitsynchronisation erfolgt bei IRT mit Hilfe des Precision Transparent Clock Protocol (PTCP) bzw. PTP (nach IEEE 1588).

Für die Gewährleistung der zeitlichen Anforderungen sind spezielle IRT-Switches erforderlich. Durch die Zeitsynchronisation bekommen alle Switches den Zeitpunkt für den Start mitgeteilt, IRT-Telegramme durchzuschleusen.

Bei der Verwendung von PROFINET IRT wird für das gesamte Netzwerk (alle IRT-Teilnehmer) offline vorab durch das verwendete Engineering-Werkzeug (z. B. das von der Firma Siemens angebotene sogenannte TIA Portal) das Senden der Prozessdaten nach einer genauen festgelegten, Reihenfolge mit höchster Präzision festgelegt. Die maximal erlaubte Abweichung vom Beginn eines Buszykluss beträgt 1 µs. Bei der Kommunikation kommt es so zu keinen Wartezeiten. Für diese auf höchste Performance getrimmte Datenübertragung sind spezielle PROFINET IRT-Hardware-Vorkehrungen zu treffen, insbesondere Ethernet-Controller die geeignet sind zur Unterstützung der Taktsynchronisation.

Durch die Vorplanung im IRT-Anteil und die Überwachung durch die IRT-Hardware ist ausgeschlossen, dass der IRT-Kommunikationsanteil durch NRT gestört wird.

Auf Kommunikationsstrecken, die keine IRT-Kommunikation erfordern, kann das Netz mit Standard-Netzwerkkomponenten kombiniert werden, PROFINET RT setzt keine spezielle Hardware voraus. Auf diesen Kommunikationsstrecken kann PROFINET RT-Kommunikation eingesetzt werden.

Dadurch wird aber auch keine Vorplanung durchgeführt, da dies eine Überwachung der Zeitscheiben durch die Hardware voraussetzen würde. PROFINET RT nutzt vielmehr die Standard-Mechanismen, die durch IEEE 802.3 definiert sind. Dadurch wird erreicht, dass PROFINET RT mit Standard-Ethernet Kommunikation (NRT) und zugehöriger Hardware koexistieren kann. Die RT-Kommunikation muss gegenüber der Standard-Kommunikation vorrangig übertragen werden, damit die RT-Kommunikation Echtzeitanforderungen erfüllen kann - selbstverständlich gehen diese Anforderungen nicht soweit wie bei IRT. Diese Bevorzugung wird durch die Benutzung der Prioritätsebenen des Ethernet erreicht.

Da die Trennung zwischen RT und NRT-Kommunikation bei PROFINET RT nicht so effektiv ist wie bei PROFINET IRT, müssen Anforderungen an die NRT-Kommunikation gestellt werden, obwohl diese Anforderungen durch die IEEE 802.3 nicht gefordert werden.

PROFINET fordert von allen Teilnehmern, dass diese nicht mehr als 3KByte/ms senden. In IEEE 802.3 existiert eine solche Forderung dagegen nicht, vielmehr gibt es mehrere Erweiterungen, die dieser Anforderung entgegenstehen, z. B. die sogenannte Burst-Mode Übertragung oder Jumbo-Frames, also nicht standardisierte und übergroße Frames.

Dies kann nun dazu führen, dass RT-Frames auf Grund überlaufender Warteschlangen in den Netzelementen verworfen werden, da die Netzwerkkomponente z. B. durch gerade übertragene Jumbo-Frames der NRT-Kommunikation blockiert ist. Die RT-Kommunikation kann dann nicht mehr aufrechterhalten werden, so dass folgerichtig die unterlagerte automatisierungstechnische Aufgabe nicht mehr fehlerfrei ausgeführt werden kann. Es ist schwierig, im realen Netzwerk diese Problematik zu diagnostizieren, da die Diagnosemöglichkeiten im Netzwerk (z. B. mittels SNMP - Simple Network Management Protocol) hierfür zu träge sind.

In einem Fall wurde ein PROFINET RT-Netzwerk zur Übertragung der Echtzeitdaten in einer industriellen Anlage aufgebaut. Im Verlauf des Anlagenlebens wurde die Anlage bei einem Wartungsfall um Komponenten zur Übertragung von Bildschirminhalte über VNC (Virtual Network Computing) erweitert. VNC ist eine allgemein bekannte Software, die den Bildschirminhalt eines entfernten Rechners (Server) auf einem lokalen Rechner (Client) anzeigt und im Gegenzug Tastatur- und Mausbewegungen des lokalen Rechners an den entfernten Rechner sendet. Dies führte dazu, dass die Anlage sporadisch stehen geblieben ist, verbunden mit hohen Kosten für den Kunden. Grund für den Stillstand war die burstartige Übertragung der Bildschirminhalte, die zum Verlust von RT-Frames an einer Netzwerkkomponente geführt hat.

Es entstehen hohe Kosten dadurch, dass die Diagnose bzw. das Finden des Verursachers der Störung sich als schwierig und langwierig erweist. Um den Verursacher zu finden, wurden während des Betriebs über längere Zeit Netzwerkprotokolle an verschiedenen Punkten im Netzwerk aufgezeichnet und SNMP-Analysen angefertigt. Da SNMP-Informationen, wie z. B. Paketverluste und Bandbreite, zyklisch in einem größeren Zeitintervall gemittelt sind, führt es dazu, dass aufgetretene Bursts nicht mehr als solche wahrgenommen werden können. Sie werden über mehrere Aufzeichnungen "verschmiert". Mit Hilfe von Netzwerkaufzeichnungstools, wie z. B. Wireshark und SNMP-Clients, versucht man so, das Verhalten auf dem Netzwerk zu verstehen.

Aus der US 2003/0149919 A1 ist bereits ein Verfahren zur Diagnose von Übertragungsstörungen in einem Datennetzwerk bekannt, insbesondere mit IP Protokoll, wobei die Fehlerdiagnose z. B. mittels SNMP Polling geschieht.

Die erweiterten Anforderungen von PROFINET RT können nicht durch das System (Netzwerk selber) erkannt werden. Des Weiteren achtet die Standard-Software/Hardware, wie z. B. VNC oder Videokameras, ausschließlich auf die Einhaltung der Standard-Ethernet (IEEE 802.3) Anforderung, aber nicht auf die Einhaltung der IRT Anforderungen.

Bisher wurde das Problem erst bei Wahrnehmung durch den Betreiber der Anlage (Anlagenstillstand) bemerkt und analysiert, um den Fehler bzw. die Störquelle zu eliminieren. Befindet sich die Anlage in der Produktionsphase sind Änderungen am Netzwerk nicht zu erwarten, mit Ausnahme des Einbringens von Zusatzgeräten für Wartung und Diagnose. Die höchsten Kosten nicht durch das erste einmalige Auftreten des Problems verursacht, sondern vielmehr durch die langwierige Diagnose zum Auffinden der Störquelle.

Es ist daher Aufgabe der Erfindung, ein Verfahren anzugeben, welches es ermöglicht, möglichst schnell zu ermitteln, wo sich die Störungsquelle befindet.

Die Aufgabe wird gelöst durch ein Verfahren gemäß den Merkmalen des Patentanspruchs 1.

Die Aufgabe wird weiterhin gelöst durch ein System gemäß den Merkmalen des Patentanspruchs 9.

Das Verfahren zur Diagnose von Übertragungs-Störungen in einem Datennetzwerk, wobei das Datennetzwerk zumindest eine erste Klasse von Netzelementen umfasst, welche Datenpakete ausschließlich gemäß einem Datenübertragungsstandard für die Realisierung von Echtzeit-Kommunikation, dem PROFINET RT Standard, versenden und/oder empfangen, und eine zweite Klasse von Netzelementen umfasst, die Datenpakete nicht oder nicht ausschließlich gemäß einem Datenübertragungsstandard für die Realisierung von Echtzeit-Kommunikation versenden und/oder empfangen wobei Diagnose-Datenpakete zielgerichtet in das Datennetzwerk eingebracht und das Datennetzwerk derart mit Diagnose-Datenpaketen zielgerichtet geflutet wird, so dass eine Auslastung des Datennetzwerks von 100 % erreicht wird.

Da beim Auftreten des Problems PROFINET RT-Pakete, die eine hohe Priorität haben, verworfen werden, werden insbesondere auch alle Pakete mit niedrigerer Priorität verworfen.

Das Netzwerk wird für die schnelle Diagnose mit Paketen niedrigster Priorität geflutet, also gerade so, dass das Netzwerk nahezu 100% ausgelastet ist. Dieses Fluten passiert gerichtet zwischen einer Menge von Teilnehmern. Die Pakete "kennen" ihren Weg und enthalten einen Zähler, welcher pro versendetes Diagnose-Datenpaket eindeutig ist und es so ermöglich, zu ermitteln, wie viele und welche Datenpakete verloren gegangen sind.

Treten nun Paketverluste auf, so kann das Vorliegen eines Problems unmittelbar nach Auftreten des Problems und ohne weiteren Zeitverlust festgestellt werden. Durch weitere Analyse der fehlenden Diagnose-Datenpakete, vorteilhafterweise mittels der in den Diagnose-Datenpaketen enthaltenen Zähler, kann eine Detektion der Netzwerkkomponenten, bei denen der Paketverlust aufgetreten ist, erfolgen.

Wurden mehrere Ausfallpunkte gefunden kann dadurch auf den Weg rückgeschlossen werden, den die gestörten Diagnose-Datenpakete zurück gelegt haben, zumindest aber auf den ersten und letzten Switch, und damit gemäß dem beanspruchten Verfahren letztendlich mit hoher Sicherheit die Störquelle identifiziert werden.

Im folgenden Ausführungsbeispiel, welches nicht einschränkend zu verstehen ist, wird die Analyse der Funkkreuzmessung beispielhaft in Pseudocode angegeben:

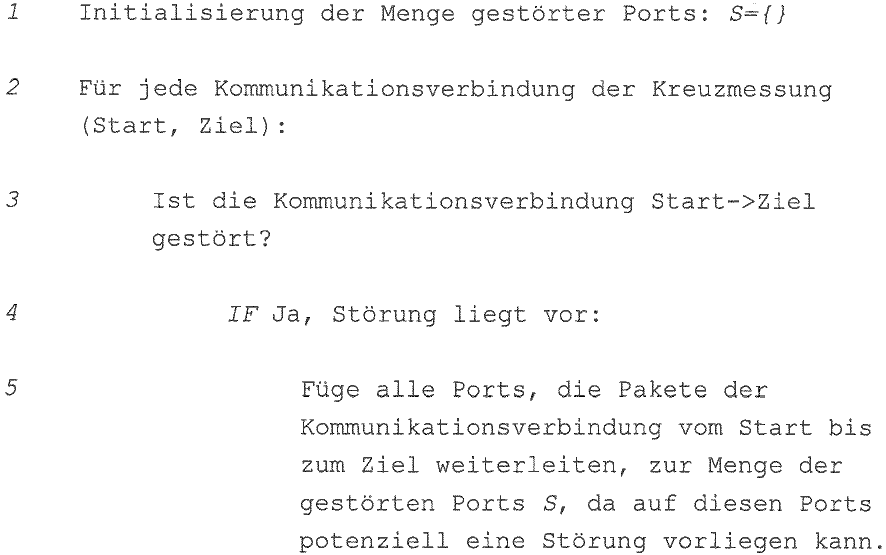

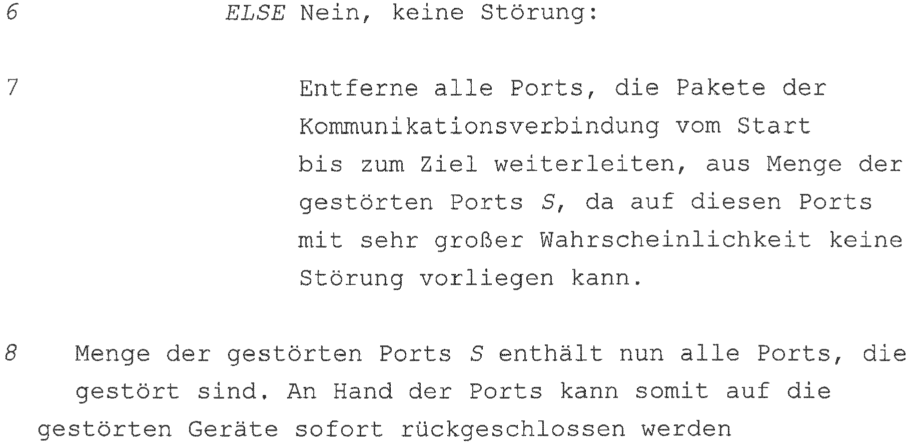

Dieses Verfahren erkennt die im Netzwerk auftretenden Paketverluste vorteilhaft unmittelbar und detektiert gleichzeitig die auslösende(n) Störquelle(n).

Es wird dadurch die langwierige Suche der Störquelle vermieden, welche die größten monetären Verluste erzeugt durch langfristige Ausfälle des Datennetzes.

Durch die schnelle Identifizierung der Störquelle können weiters auch andere, als Verursacher verdächtigte, Komponenten schnell ausgeschlossen werden.

Im Folgenden wird die Erfindung durch Figuren dargestellt:
Figur 1 zeigt eine funktionierende Netzwerkstruktur aus heutiger Sicht mit PROFINET RT,
Figur 2 zeigt in die Netzwerkstruktur aus Figur 1 eingebrachten Wartungs-PG mit einer VNC-Kommunikation (Bildschirmübertragung) vom HMI1 zum PG,
Figur 3 zeigt die VNC-Datenübertragung aus Figur 2, die zur Störung des RT-Verkehrs führt, und
Figur 4 zeigt die Detektion der Störung durch "Kreuzmessung" gemäß dem beanspruchten Verfahren

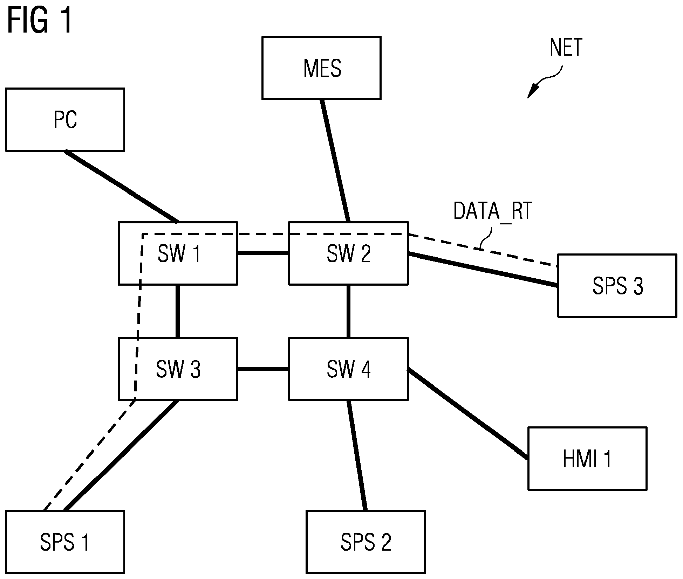

Das Datennetz NET besteht dabei aus mehreren miteinander verbundenen Vermittlungsknoten, auch Switch genannt, SW1 - SW4. Über diese Netzelemente tauschen sich die weiteren angeschlossenen Netzelemente aus. In dem in Figur 1 dargestellten Beispiel sind dies mehrere Speicherprogrammierbare Steuerungen SPS1 - SPS3 eines Automatisierungssystems. Des Weiteren ein Manufacturing Execution System MES, eine Bedienoberfläche Human Machine Interface HMI1 und ein weiteres Gerät PC.
Zwei der Speicherprogrammierbaren Steuerungen SPS1 und SPS3 tauschen Datenpakete DTA_RT aus, der Weg des Datenpakets innerhalb des Netzwerk ist klar wie folgt: SW2 - SW1 - SW3.

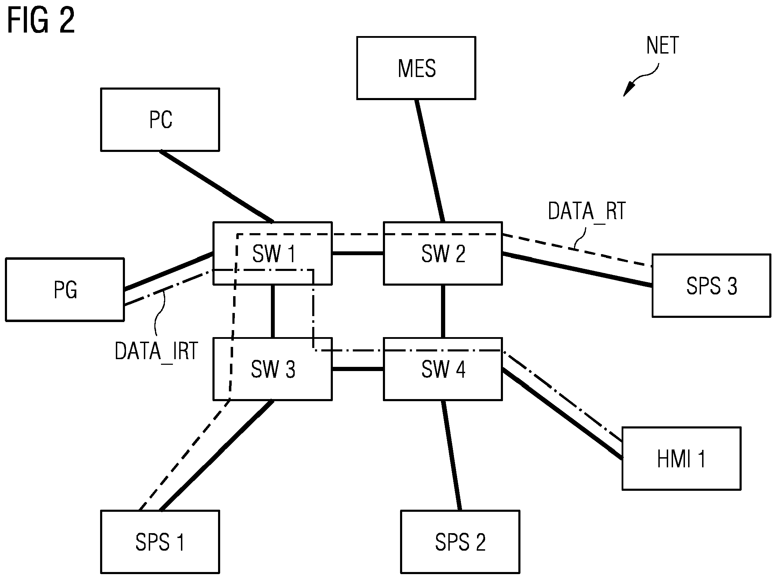

In Figur 2 wird nun in das in Figur 1 bereits beschriebene Datennetz ein weiteres Netzgerät PG eingeführt, beispielsweise um in dem zugrunde liegenden Automatisierungssystem fällige Wartungsarbeiten durchzuführen. Dieses sendet ebenfalls Datenverkehr DATA_IRT über einen weiteren definierten Weg innerhalb des Netzwerk: SW1 - SW3 - SW4.

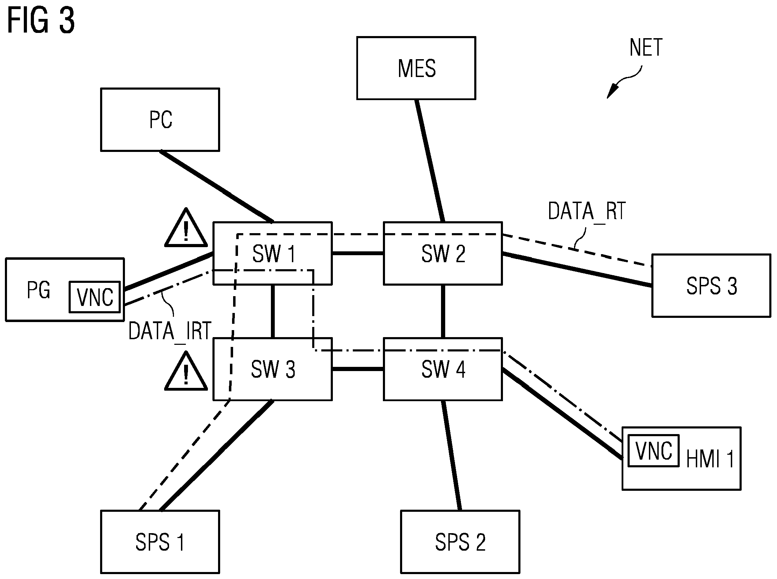

In einem Beispiel wird nun das Virtual Network Computing, kurz VNC, verwendet. Dabei handelt es sich um eine Software, die den Bildschirminhalt eines entfernten Rechners (Server) auf einem lokalen Rechner (Client) anzeigt und im Gegenzug Tastatur- und Mausbewegungen des lokalen Rechners an den entfernten Rechner sendet. Damit kann man auf einem entfernten Rechner arbeiten, als säße man direkt davor. In Figur 3 ist nun dargestellt, dass aufgrund des VNC burstartig ungewöhnlich viele ungeplante Datenpakete übermittelt werden, da ein unerwartetes Ereignis eingetreten ist.

Da die Netzelemente SW1 und SW3 sowohl den regulären Datenverkehr zwischen SPS1 und SPS3 abwickeln müssen als auch die Datenpakete, die das VNC erzeugt, ergeben sich hier Störungen in der Datenübermittlung.

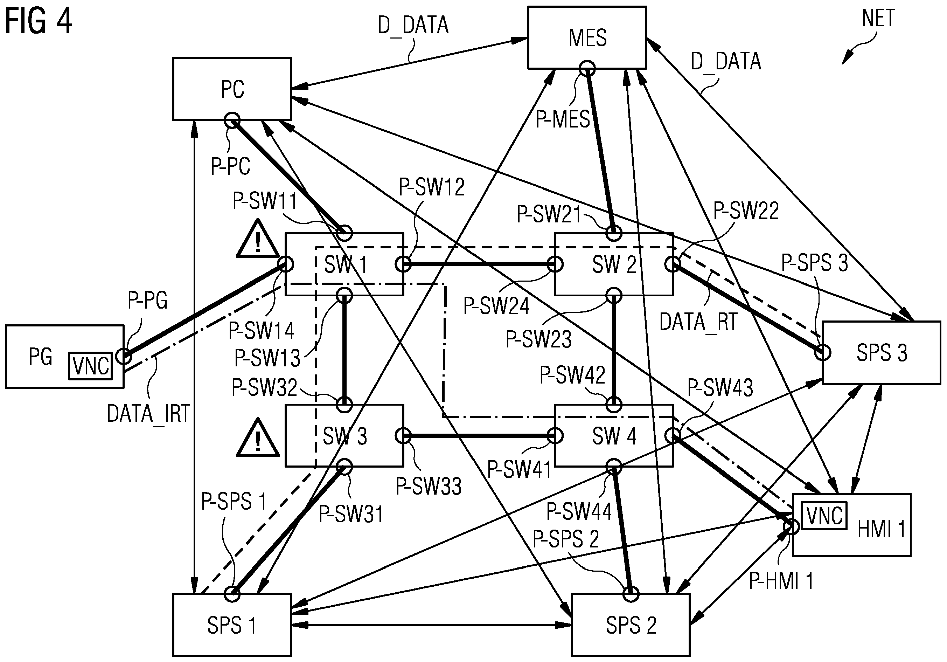

Figur 4 zeigt basierend auf der in Figur 3 geschilderten Situation nun wie mittels des erfindungsgemäßen Verfahrens das gesamte Netz NET mit Diagnose-Datenpaketen D_DATA geflutet wird. Ergänzend werden die jeweiligen Netzelemente vorteilhafterweise noch mit zusätzlichen Daten-Ports P-PC, P-MES, P-usw., also zusätzlichen Adressierungs-Attributen, dargestellt und unterschieden.

Man kann beispielsweise sehen, dass der Datenverkehr des VNC Protokolls, DATA_IRT, im Netzelement SW3 über Port P_SW33 geleitet wird, wohingegen der andere Datenverkehr DATA_RT über Port P_SW31 weiter geleitet wird.

Das folgende Beispiel setzt nur auf die Netzelemente, nicht aber auf die Port-Information ab.

Die Tabelle zeigt nun auf welchen "Flooding"-Verbindungen Pakete verloren gehen. Dabei werden in dieser Tabelle nur die jeweiligen Endpunkte der Verbindungen, also Sender und Empfänger, aufgelistet.

| **zu von** | **PC** | **MES** | **SPS3** | **HMI1** | **SPS2** | **SPS1** |
|---|---|---|---|---|---|---|
| **PC** | ○ | | | x | x | x |
| **MES** | | ○ | | x | x | x |
| **SPS3** | | | ○ | x | x | x |
| **HMI1** | | | | ○ | | |
| **SPS2** | | | | x | x | |
| **SPS1** | | | | x | x | ○ |

Aus dieser Tabelle und der Kenntnis des zugrunde liegenden Datennetzes kann nun gefolgert werden, dass die Netzelemente / Switche SW1, SW3 und SW4 (welche in der Tabelle nicht enthalten sind) betroffen sind.

Wenn man die Verbindung PC - MES ansieht, so läuft die zwar über den eigentlich betroffenen Switch SW1, jedoch werden hier andere Sende- und Empfangsports verwendet als von der "Störquelle", so dass diese Verbindung nicht als gestört aufgenommen wird.

Unter der Annahme, dass die Switche über eine Sendequeue pro Port verfügen ergibt sich darüber hinaus auch eine Senderichtung, aus der man folgern kann, dass die Störquelle an SW1 angeschlossen sein muss und die Störsenke das HMI-Panel sein muss.

Dies kann man daran erkennen, dass die Tabelle nicht symmetrisch ist: so ist die Verbindung von PC zu HMI1 als gestört gekennzeichnet, der Rückweg von HMI1 zu PC aber nicht.

Mit dieser Information steht fest, dass die Störquelle entweder der PC1 oder das PG sein muss. Bei näherer Betrachtung mit Hilfe von SNMP, dem Simple Network Management Protocol (englisch für "einfaches Netzwerkverwaltungsprotokoll"), am Switch SW1 kann jetzt das Netzelement PG als ursächlicher Störer eindeutig identifiziert werden.

Die Analyse der Ergebnis-Tabelle der Funkkreuzmessung kann auch automatisiert durch ein Programm ausgewertet werden. Der Algorithmus zur Analyse wurde bereits weiter Oben in Form von Pseudocode angegeben..

### Bezugszeichenliste

- DATA_NRT: Data Non-Realtime
- DATA_RT: Data Realtime
- F: Filter
- HMI1: Human Machine Interface
- HW AP: Hardware PROFINET Access Plug
- MES: Manufacturing Execution System
- NET: Netzwerk
- P-...: Kommunikations-Port eines Netzelements
- PC: Personal Computer
- PG: Produktions-Gerät
- SW2, 3, 4: Switch
- SPS1, 2, 3: Speicherprogrammierbare Steuerung
- S: Speicher

## Patentansprüche

1. Verfahren zur Diagnose von Übertragungs-Störungen in einem Datennetzwerk (NET), wobei das Datennetzwerk zumindest eine erste Klasse von Netzelementen (SPS1, 2, 3, HMI1) umfasst, welche Datenpakete (DATA_RT) ausschließlich gemäß einem Datenübertragungsstandard für die Realisierung von Echtzeit-Kommunikation, gemäß dem PROFINET RT Standard, mit hoher Priorität und zeitsynchronisiert versenden und/oder empfangen, und eine zweite Klasse von Netzelementen (PC, MES) umfasst, die Datenpakete (DATA_NRT) nicht oder nicht ausschließlich gemäß einem Datenübertragungsstandard für die Realisierung von Echtzeit-Kommunikation versenden und/oder empfangen
**dadurch gekennzeichnet, dass**
bei Verlust von Datenpaketen erster Klasse (DATA_RT) Diagnose-Datenpakete (D_DATA) mit niedrigster Priorität gemäß nicht oder nicht ausschließlich dem Datenübertragungsstandard für die Realisierung von Echtzeit-Kommunikation zielgerichtet in das Datennetzwerk eingebracht werden, so dass der Weg der Diagnose-Datenpakete durch das Datennetzwerk bekannt ist und das Datennetzwerk derart mit Diagnose-Datenpaketen (D_DATA) zielgerichtet geflutet wird, so dass eine Auslastung des Datennetzwerks von 100 % erreicht wird, mit folgenden Schritten
- sende ein Diagnose-Datenpaket (D_DATA) von einem ersten Netzelement (MES, HMI1, PG, SPS...) an ein zweites Netzelement,
- ermittle, ob das Diagnose-Datenpaket von dem zweiten Netzelement empfangen wird,
- wenn das Diagnose-Datenpaket gestört ist:
ermittle alle Netzelement-Ports (P-...), welche von dem Diagnose-Datenpaket auf dem Weg vom ersten Netzelement zum zweiten Netzelement passiert werden, und markiere diese Ports als potentiell gestört, und
- wenn das Diagnose-Datenpaket nicht gestört ist:
ermittle alle Netzelement-Ports (P-...), welche von dem Diagnose-Datenpaket auf dem Weg vom ersten Netzelement zum zweiten Netzelement passiert werden, und entferne bei diesen Ports die Markierung als potentiell gestört.

2. Verfahren nach Patentanspruch 1,
**dadurch gekennzeichnet, dass**
zur Detektion der die Übertragungs-Störungen auslösenden Netzwerk-Komponente (PG) eine Auswertung auf Basis der empfangenen Diagnose-Datenpakete (D_DATA) durchgeführt wird.

3. Verfahren nach einem der vorherigen Patentansprüche, **dadurch gekennzeichnet, dass**
zur Detektion der die Übertragungs-Störungen auslösenden Netzwerk-Komponente (PG) eine Auswertung auf Basis der verloren gegangenen Diagnose-Datenpakete (D_DATA) durchgeführt wird.

4. Verfahren nach Patentanspruch 2 oder 3,
**dadurch gekennzeichnet, dass**
zum Zweck der Auswertung
ein erstes Datenfeld mit einem jeweils eindeutigen Zähler, ein zweites Datenfeld mit einer Start-Adresse und
ein drittes Datenfeld mit einer Ziel-Adresse
in den Diagnose-Datenpaketen (D_DATA) enthalten ist.

5. Verfahren nach einem der vorherigen Patentansprüche, **dadurch gekennzeichnet, dass**
bei der Detektion der die Übertragungs-Störungen auslösenden Netzwerk-Komponente (PG) zumindest zwei Netzwerk-Komponenten ermittelt, welche zum Verlust von Diagnose-Datenpaketen (D_DATA) führen, auf den Weg, den die Diagnose-Datenpakete zurück gelegt haben, geschlossen werden.

6. Verfahren nach Patentanspruch 5,
**dadurch gekennzeichnet, dass**
bei der Detektion der die Übertragungs-Störungen auslösenden Netzwerk-Komponente (PG) zumindest zwei Wege ermittelt werden und auf Basis dieser ermittelten Wege eine Schnittmenge gebildet wird.

7. Verfahren nach Patentanspruch 1 **dadurch gekennzeichnet, dass**
anhand der markierten Netzelement-Ports (P-...) ein gestörtes Netzelement ermittelt wird.

8. Verfahren nach einem der vorherigen Patentansprüche,
**dadurch gekennzeichnet, dass**
die Datenpakete über das Netzwerk gemäß dem OPC-UA Standard versendet werden.

9. System zur Diagnose von Übertragungs-Störungen in einem Datennetzwerk (NET), wobei das System eine Vorrichtung zur Diagnose umfasst, und wobei das System ein Datennetzwerk umfasst; wobei das Datennetzwerk eine erste Klasse von Netzelementen (SPS1, 2, 3, HMI1) umfasst, welche Datenpakete (DATA_RT) ausschließlich gemäß einem Datenübertragungsstandard für die Realisierung von Echtzeit-Kommunikation, gemäß dem PROFINET RT Standard, versenden und/oder empfangen, und eine zweite Klasse von Netzelementen (PC, MES) umfasst, die Datenpakete (DATA_NRT) nicht oder nicht ausschließlich gemäß einem Datenübertragungsstandard für die Realisierung von Echtzeit-Kommunikation versenden und/oder empfangen
**dadurch gekennzeichnet, dass**
die Vorrichtung ausgebildet ist zur Durchführung eines der Verfahren gemäß den Merkmalen der Patentansprüche 1 bis 8 .

## Claims

1. Method for diagnosing transmission interference in a data network (NET), the data network comprising at least one first class of network elements (SPS1, 2, 3, HMI1) which transmit and/or receive data packets (DATA_RT) only according to a data transmission standard for implementing real-time communication, according to the PROFINET RT standard, with high priority and in a time-synchronized manner, and comprising a second class of network elements (PC, MES) which do not or do not only transmit and/or receive data packets (DATA_NRT) according to a data transmission standard for implementing real-time communication, **characterized in that**
if data packets of the first class (DATA_RT) are lost, diagnostic data packets (D_DATA) are not, or are not only, introduced into the data network in a targeted manner with the lowest priority according to the data transmission standard for implementing real-time communication, with the result that the path of the diagnostic data packets through the data network is known and the data network is flooded in a targeted manner with diagnostic data packets (D_DATA) such that 100% utilization of the data network is achieved, having the following steps
- transmit a diagnostic data packet (D_DATA) from a first network element (MES, HMI1, PG, SPS...) to a second network element,
- determine whether the diagnostic data packet is received by the second network element,
- if the diagnostic data packet has interference:
determine all network element ports (P-...) through which the diagnostic data packet passes on the way from the first network element to the second network element, and mark these ports as potentially having interference, and
- if the diagnostic data packet does not have interference:
determine all network element ports (P-...) through which the diagnostic data packet passes on the way from the first network element to the second network element, and for these ports remove the mark as potentially having interference.

2. Method according to Patent Claim 1,
**characterized in that**
to detect the network component (PG) causing the transmission interference, an evaluation is carried out on the basis of the received diagnostic data packets (D_DATA).

3. Method according to one of the preceding patent claims, **characterized in that**
to detect the network component (PG) causing the transmission interference, an evaluation is carried out on the basis of the lost diagnostic data packets (D_DATA).

4. Method according to Patent Claim 2 or 3,
**characterized in that**
the diagnostic data packets (D_DATA) contain
a first data field with a unique counter in each case,
a second data field with a starting address and
a third data field with a destination address
for the purpose of the evaluation.

5. Method according to one of the preceding patent claims, **characterized in that**
upon detection of the network component (PG) causing the transmission interference, at least two network components which result in the loss of diagnostic data packets (D_DATA) are determined and the path covered by the diagnostic data packets is inferred.

6. Method according to Patent Claim 5,
**characterized in that**
upon detection of the network component (PG) causing the transmission interference, at least two paths are determined and an intersection is formed on the basis of these determined paths.

7. Method according to Patent Claim 1,
**characterized in that**
a network element having interference is determined on the basis of the marked network element ports (P-...).

8. Method according to one of the preceding patent claims, **characterized in that**
the data packets are transmitted via the network according to the OPC UA standard.

9. System for diagnosing transmission interference in a data network (NET), the system comprising a device for diagnosing, and the system comprising a data network; the data network comprising a first class of network elements (SPS1, 2, 3, HMI1) which transmit and/or receive data packets (DATA_RT) only according to a data transmission standard for implementing real-time communication, according to the PROFINET RT standard, and comprising a second class of network elements (PC, MES) which do not or do not only transmit and/or receive data packets (DATA_NRT) according to a data transmission standard for implementing real-time communication,
**characterized in that**
the device is configured for carrying out one of the methods according to the features of Patent Claims 1 to 8.

## Revendications

1. Procédé pour le diagnostic de perturbations de transmission dans un réseau de données (NET), le réseau de données comprenant au moins une première classe d'éléments de réseau (SPS1, 2, 3, HMI1) qui envoient et/ou reçoivent des paquets de données (DATA_RT) exclusivement selon une norme de transmission de données pour la réalisation d'une communication en temps réel conformément à la norme PROFINET RT avec une priorité élevée et de manière synchronisée dans le temps, et une deuxième classe d'éléments de réseau (PC, MES) qui envoient et/ou reçoivent des paquets de données (DATA_NRT) de manière non ou non exclusivement conforme à une norme de transmission de données pour la réalisation d'une communication en temps réel,
**caractérisé en ce que**,
en cas de perte de paquets de données de la première classe (DATA_RT), des paquets de données de diagnostic (D_DATA) avec la priorité la plus basse sont introduits de manière ciblée dans le réseau de données de manière non ou non exclusivement conforme à la norme de transmission de données pour la réalisation d'une communication en temps réel, de sorte que le chemin des paquets de données de diagnostic à travers le réseau de données est connu et que le réseau de données est submergé de manière ciblée de paquets de données de diagnostic (D_DATA) de telle sorte qu'on obtient une exploitation du réseau de données de 100%, avec les étapes suivantes :
- envoie un paquet de données de diagnostic (D_DATA) d'un premier élément de réseau (MES, HMI1, PG, SPS ...) à un deuxième élément de réseau,
- détermine si le paquet de données de diagnostic est reçu par le deuxième élément de réseau,
- si le paquet de données de diagnostic est perturbé :
- détermine tous les ports d'élément de réseau (P-...) par lesquels passe le paquet de données de diagnostic en allant du premier élément de réseau vers le deuxième élément de réseau, et marque ces ports comme étant potentiellement perturbés, et,
- si le paquet de données de diagnostic n'est pas perturbé :
- détermine tous les ports d'élément de réseau (P-...) par lesquels passe le paquet de données de diagnostic en allant du premier élément de réseau vers le deuxième élément de réseau, et retire de ces ports le marquage comme étant potentiellement perturbés.

2. Procédé selon la revendication 1, **caractérisé en ce qu'**une évaluation est effectuée sur la base des paquets de données de diagnostic reçus (D_DATA) pour détecter le composant de réseau (PG) qui déclenche les perturbations de transmission.

3. Procédé selon l'une des revendications précédentes, **caractérisé en ce qu'**une évaluation est effectuée sur la base des paquets de données de diagnostic perdus (D_DATA) pour détecter le composant de réseau (PG) qui déclenche les perturbations de transmission.

4. Procédé selon la revendication 2 ou 3, **caractérisé en ce que**, aux fins de l'évaluation,
un premier champ de données avec un compteur respectivement univoque, un deuxième champ de données avec une adresse de départ et un troisième champ de données avec une adresse d'arrivée sont contenus dans les paquets de données de diagnostic (D_DATA).

5. Procédé selon l'une des revendications précédentes, **caractérisé en ce que**, lors de la détection du composant de réseau (PG) qui déclenche les perturbations de transmission, au moins deux composants de réseau qui entraînent la perte de paquets de données de diagnostic (D_DATA) sont fermés sur le chemin parcouru par les paquets de données de diagnostic.

6. Procédé selon la revendication 5, **caractérisé en ce que**, lors de la détection du composant de réseau (PG) qui déclenche les perturbations de transmission, au moins deux chemins sont déterminés et une intersection est formée sur la base de ces chemins déterminés.

7. Procédé selon la revendication 1, **caractérisé en ce qu'**un élément de réseau perturbé est déterminé à l'aide des ports d'élément de réseau marqués (P-...).

8. Procédé selon l'une des revendications précédentes, **caractérisé en ce que** les paquets de données sont envoyés sur le réseau conformément à la norme OPC-UA.

9. Système pour le diagnostic de perturbations de transmission dans un réseau de données (NET), le système comprenant un dispositif de diagnostic et le système comprenant un réseau de données, le réseau de données comprenant une première classe d'éléments de réseau (SPS1, 2, 3, HMI1) qui envoient et/ou reçoivent des paquets de données (DATA_RT) exclusivement selon une norme de transmission de données pour la réalisation d'une communication en temps réel conformément à la norme PROFINET RT, et une deuxième classe d'éléments de réseau (PC, MES) qui envoient et/ou reçoivent des paquets de données (DATA_NRT) de manière non ou non exclusivement conforme à une norme de transmission de données pour la réalisation d'une communication en temps réel,
**caractérisé en ce que**
le dispositif est conçu pour réaliser l'un des procédés selon les caractéristiques des revendications 1 à 8.
